# EUROPEAN PATENT APPLICATION

(11) **EP 4 835 139 A1**
(43) Date of publication of application: **04.11.2026**
(21) Application number: 25172804.4
(22) Date of filing: 28.04.2025
(51) Int. Cl.: C25B 1/04, C25B 1/34, C25B 9/67, C25B 9/75, C25B 9/77, C25B 15/08, F28D 9/00, F28F 3/00

(54) **APPLIANCE, BACK GASKET AND ARRANGEMENT**

(71) Applicant: Alfa Laval Corporate AB, 221 00 Lund (SE)
(72) Inventor: STÅLBRAND, Erik, 221 00 LUND (SE); SANDGREN, Martin, 221 00 LUND (SE); ÅSTRAND, Tobias, 221 00 LUND (SE)
(74) Representative: Alfa Laval Attorneys

(57) **Abstract**

An appliance (5), a back gasket (2) and an arrangement (0) are provided. The appliance (5) includes a corrugated heat transfer plate (7) which comprises a first end portion (19) with first, third and fifth portholes (25, 27, 29), an intermediate portion (21) with a heat transfer area (45) and a second end portion (23) with second, fourth and sixth portholes (33, 35, 37). The heat transfer plate (7) further comprises a HT back gasket groove (87) extending on the back side (11) of the heat transfer plate (7). The HT back gasket groove (87) comprises an annular field portion (87a) enclosing the heat transfer area (45) and annular third, fourth, fifth and sixth ring portions (87b, 87c, 87d, 87e) enclosing the third, fourth, fifth and sixth portholes (27, 35, 29, 37), respectively. The appliance (5) is characterized in that that the field portion (87a) of the HT back gasket groove (87) is arranged on a distance > 0 from the third, fourth, fifth and sixth ring portions (87b, 87c, 87d, 87e) of the HT back gasket groove (87).

## Description

### Technical Field

The invention relates to an appliance, which comprises a heat transfer plate, a back gasket and an arrangement thereof. The appliance, the back gasket and the arrangement may be comprised in an apparatus used for a heat generating process, such as electrolysis.

### Background Art

Electrolysis is a well-known process of using electricity to chemically decompose an electrolyte. For example, electrolysis can be used to split water contained in an electrolyte into hydrogen and oxygen. During electrolysis, heat may be generated, which heat may have to be diverted for maintained electrolysis efficiency.

WO2024133652 discloses an apparatus used for producing hydrogen through alkaline water electrolysis. The apparatus comprises a plurality of aligned heat transfer plates defining, together with gasket arrangements and sealing arrangement positioned between the heat transfer plates, alternately arranged electrolysis channels and cooling channels. The cooling channels are arranged to feed a cooling fluid through the apparatus, while the electrolysis channels are arranged to feed an electrolyte through the apparatus. Even though this apparatus functions properly and produces the required amount of hydrogen, there is still room for improvement of the apparatus, for example as regards its operational safety.

### Summary

An object of the present invention is to provide an appliance, which comprises a heat transfer plate, a back gasket and an arrangement thereof so as to enable realization of a safer hydrogen producing apparatus comprising appliance and said back gasket, and, thus, said arrangement. The basic concept of the invention is to offer an appliance, a back gasket and an arrangement configured to reduce the risk of mixing of the cooling fluid and the electrolyte inside the hydrogen producing apparatus.

Thus, the appliance, the back gasket and the arrangement according to the invention may be used in an apparatus for production of hydrogen.

Since the appliance, the back gasket and the arrangement according to the invention is not arranged for use on its own, but as a component of an apparatus as described above, the advantages of different features and embodiments of the appliance, the back gasket and the arrangement appear first when these are installed in the apparatus.

An appliance according to the invention includes a heat transfer plate which is corrugated, has opposing front and back sides and comprises a first end portion, an intermediate portion and a second end portion arranged in succession along a longitudinal center axis of the heat transfer plate. The heat transfer plate further comprises first, third and fifth portholes arranged within the first end portion, second, fourth and sixth portholes arranged within the second end portion, and a heat transfer area arranged within the intermediate portion. The appliance is characterized in that that the heat transfer plate further comprises a HT back gasket groove, which extends on the back side of the heat transfer plate, a first transfer hole, which is arranged within a first half of the heat transfer plate comprising the first end portion, and a second transfer hole, which is arranged within a second half of the heat transfer plate comprising the second end portion. An annular field portion of the HT back gasket groove encloses the heat transfer area. The first and second transfer holes are arranged outside the field portion of the HT back gasket groove. The first and second portholes are arranged within the field portion of the HT back gasket groove. The third, fourth, fifth and sixth portholes are arranged outside the field portion of the HT back gasket groove. The HT back gasket groove further comprises annular third, fourth, fifth and sixth ring portions which enclose the third, fourth, fifth and sixth portholes, respectively. One of the third and the fifth ring portions also encloses the first transfer hole and one of the fourth and sixth ring portions also encloses the second transfer hole. The appliance is characterized in that the field portion of the HT back gasket groove is arranged on a distance > 0 from the third, fourth, fifth and sixth ring portions of the HT back gasket groove.

It should be stressed that "annular" not necessarily is circular but may be any "closed" shape, such as oval, polygonal and any combination thereof. Similarly, "ring" does not necessarily mean circular but may mean any "closed" shape, such as oval, polygonal and any combination thereof.

The first and second halves of the heat transfer plate are arranged on opposite sides of the transverse center axis of the heat transfer plate.

The HT back gasket groove may be arranged to receive a back gasket configured to seal between the appliance, or, more particularly, the heat transfer plate of the appliance, and an adjacent appliance, or, more particularly, the heat transfer plate of the adjacent appliance, which adjacent appliance is arranged on the back side of the heat transfer plate.

In that the field portion of the HT back gasket groove is arranged on a distance > 0 from, i.e. separated from, in other words, not arranged in direct contact with, the third, fourth, fifth and sixth ring portions of the HT back gasket groove, a leakage area is formed between the field portion and the third, fourth, fifth and sixth ring portions of the HT back gasket groove. Any fluid leaking from an area enclosed by the field portion of the HT back gasket groove past the back gasket may end up in this leakage area. Similarly, any fluid leaking from areas enclosed by the third, fourth, fifth and sixth ring portions of the HT back gasket groove past the back gasket may end up in this leakage area. If instead the field portion of the HT back gasket groove had been arranged on a distance = 0 from, i.e. not separated from, in other words, arranged in direct contact with, or partially directly connected i.e. integrally formed with, the third, fourth, fifth and sixth ring portions of the HT back gasket groove, any fluid leaking from the area enclosed by the field portion could end up in the areas enclosed by the third, fourth, fifth and sixth ring portions, and vice versa, which is disadvantageous since fluid mixing in an apparatus comprising the appliance is highly undesirable in that it may lower the efficiency of the apparatus and even be directly dangerous.

The third, fourth, fifth and sixth ring portions of the HT back gasket groove may all be arranged on a distance > 0, i.e. separated, from each other. Alternatively, the third and fifth ring portions, and/or the fourth and sixth ring portions, may be pairwise partly integrally formed or directly connected with each other.

The appliance may be so designed that the heat transfer plate further comprises one or more bridge grooves extending on the back side of the heat transfer plate. Each one of said bridge grooves may extend between the field portion of the HT back gasket groove and one of the third, fourth, fifth and sixth ring portions of the HT back gasket groove. Thus, each one of said bridge grooves may connect the field portion and one of the third, fourth, fifth and sixth ring portions of the HT back gasket groove. The bridge grooves may be arranged to receive a respective gasket bridge connecting a field portion and a ring portion of the back gasket so as to facilitate handling of the back gasket. These gasket bridges may be used to fasten the back gasket, for example by adhesive tape or glue, to the heat transfer plate.

The appliance may be such that the third and fifth ring portions of the HT back gasket groove of the heat transfer plate extend on one side only of an imaginary third straight line, which extends perpendicular to said longitudinal center axis of the heat transfer plate, while the heat transfer area extends on another opposite side only of the imaginary third straight line. Further, the fourth and sixth ring portions of the HT back gasket groove of the heat transfer plate may extend on one side only of an imaginary fourth straight line, which extends perpendicular to said longitudinal center axis of the heat transfer plate, while the heat transfer area may extend on another opposite side only of the imaginary fourth straight line. Thus, the heat transfer area may extend solely between the imaginary third and fourth straight lines while the third, fourth, fifth and sixth ring portions may extend solely on an outside of the imaginary third and fourth straight lines. Thereby, the heat transfer area may be maximized and as uniform as possible, which may result in an optimized heat transfer capability. Further, such a design may enable a reduction of the pressurizing of components of the apparatus extending within the heat transfer area. Such components may, for example, comprise a membrane.

The heat transfer plate of the appliance may further comprise a second distribution area which is patterned differently than the heat transfer area. The second distribution area may be arranged between the second, fourth and sixth portholes and the heat transfer area. The second distribution area may comprise a second primary distribution sub area and a second secondary distribution sub area. The second primary distribution sub area may be patterned differently than the second secondary distribution sub area. The second secondary distribution sub area may be arranged between, and border on, i.e. extend directly adjacent to, the second primary distribution sub area and the heat transfer area.

If the heat transfer plate comprises a second distribution area, a more even or uniform fluid distribution across the heat transfer plate may be achieved in an apparatus comprising the appliance. Further, if the second distribution area, in turn, comprises differently patterned second primary and second secondary distribution sub areas, the fluid distribution across the heat transfer plate may be optimized in an apparatus comprising the appliance.

The heat transfer plate of the appliance may further comprise a first distribution area which is patterned differently than the heat transfer area. The first distribution area may be arranged between the first, third and fifth portholes and the heat transfer area. The first distribution area may comprise a first primary distribution sub area and a first secondary distribution sub area. The first primary distribution sub area may be patterned differently than the first secondary distribution sub area. The first secondary distribution sub area may be arranged between, and border on, i.e. extend directly adjacent to, the first primary distribution sub area and the heat transfer area.

The appliance may be so designed that the fourth and sixth ring portions of the HT back gasket groove of the heat transfer plate extend on one side only of the second secondary distribution sub area, while the heat transfer area extends on another opposite side only of the second secondary distribution sub area. Such a design may enable a relatively straight forward construction of the heat transfer plate, with a uniform second secondary distribution sub area providing a uniform fluid distribution.

The appliance may have such a design that the HT back gasket groove of the heat transfer plate has one symmetry axis only. Thereby, the first and second end portions of the heat transfer plate may have different configurations and be optimized to the fluids to be fed through an apparatus comprising the appliance so as to optimize the performance of the apparatus.

The appliance may further comprise an electrode device having opposing front and back sides. The front side of the heat transfer plate may abut the back side of the electrode device. The electrode device may cover an engagement portion of the heat transfer plate. The first, third and fifth portholes may be arranged on one side only of an imaginary first straight line extending perpendicular to the longitudinal center axis of the heat transfer plate. The electrode device may be arranged on another side only of this imaginary first straight line. The second, fourth and sixth portholes may be arranged on one side only of an imaginary second straight line extending perpendicular to the longitudinal center axis of the heat transfer plate. The electrode device may be arranged on another side only of this imaginary second straight line.

The electrode device may have any suitable shape, such as a rectangular shape or an essentially rectangular shape with a pair of opposing sides bulging away from each other. The design of the electrode device is typically adapted to the design of the heat transfer plate. The electrode device may be formed as a plate.

In that the front side of the heat transfer plate abuts the back side of the electrode device, and in that the electrode device covers an engagement portion of the heat transfer plate, the front side of the heat transfer plate is, within the engagement portion of the heat transfer plate, in contact with the back side of the electrode device. Typically, the heat transfer plate and the electrode device contact each other within discrete contact areas and, thus, not across or over the complete engagement portion of the heat transfer plate and the complete electrode device.

If the appliance comprises an electrode device in addition to the heat transfer plate, the distance between electrodes in an apparatus comprising the appliance may be relatively even and small which may enable an increased production of hydrogen in the apparatus. It should be stressed that all parts of the electrode device, for example a predominantly outer portion of it, may contribute less, or not at all, to the increased production of hydrogen in the apparatus but instead may provide other effects.

As expressed differently above, the electrode device may extend between the imaginary first and second straight lines, i.e. between the portholes within the first end portion, and the portholes within the second end portion, of the heat transfer plate. Thus, the electrode device may be smaller than the heat transfer plate in that at least an extension of the heat transfer plate along the longitudinal center axis of the heat transfer plate exceeds an extension of the electrode device along the longitudinal center axis of the heat transfer plate. If the electrode device extends within the portholes of the heat transfer plate, it doesn't have to comprise portholes for feeding fluids past the electrode device. A smaller electrode device without portholes enables relatively robust and mechanically straight-forward sealing solutions in the apparatus comprising the appliance.

The electrode device may comprise a non-solid center portion and an outer portion arranged outside the center portion as seen from a center of the electrode device. More than half of the outer portion may be solid.

By non-solid is here meant containing spaces or gaps. For example, the non-solid center portion may be a perforated center portion of the electrode device, a mesh, a net, a grid, a foam or similar.

By solid is here meant not containing spaces or gaps, i.e. consisting of the same substance throughout. For example, the at least predominantly solid outer portion may be a non-perforated outer portion of the electrode device. The outer portion of the electrode device may be continuous or intermittent. For example, an intermittent outer portion may extend on two opposite sides only of the non-solid center portion of the electrode device.

An electrode device comprising a predominantly solid outer portion may be used to separate and control flows inside the apparatus comprising the appliance, as will be described further below. An at least predominantly solid outer portion of the electrode device may also aid in maintaining in place other components of the apparatus comprising the plate appliance, such as a front gasket arrangement which will be further discussed below.

A back gasket according to the invention is for sealing between two corrugated heat transfer plates. The back gasket comprises an annular field portion enclosing a field gasket area, and annular third, fourth, fifth and sixth ring portions arranged outside said field gasket area. Each of the third, fourth, fifth and sixth annular ring portions encloses a ring gasket area which is smaller than the field gasket area. The third and fifth ring portions are arranged on one side of a transverse center axis of said field gasket area. The fourth and sixth ring portions are arranged on another side of said transverse center axis. The back gasket is characterized in that the third and fifth ring portions are integrally formed. The fourth and sixth ring portions are integrally formed, and the field portion is separate from the third, fifth, fourth and sixth ring portions. Thereby, the field portion is arranged to be positioned on a distance > 0 from the third, fifth, fourth and sixth ring portions when sealing between said two corrugated heat transfer plates.

That the field portion is formed separately from the third, fifth, fourth and sixth ring portions means that they are not integrally formed or *directly* connected but instead discrete components.

The back gasket may be arranged to be received in a HT back gasket groove of a heat transfer plate of an appliance according to the invention, as described above.

The back gasket may further comprise one or more gasket bridges. Each of the gasket bridges may extend between the field portion of the back gasket and one of the third, fourth, fifth and sixth ring portions of the back gasket. The gasket bridges may facilitate handling of the back gasket and be arranged to be received in the bridge grooves of a heat transfer plate of an appliance according to the invention, as described above.

The back gasket may further comprise a first gasket attachment means comprising a connection member. The connection member may engage with, and project from, one of the gasket bridges. The first gasket attachment means may be arranged to be fastened to a heat transfer plate to attach the back gasket to the same. To this end, as a first example, the first gasket attachment means may be arranged to engage with, for example "pinch", a heat transfer plate edge. As another example, the first gasket attachment means may be arranged to be glued or taped to the heat transfer plate. As yet another example, the first gasket attachment means may be arranged to engage with a hole or a recess in the heat transfer plate. A first gasket attachment means engaging with one of the gasket bridges may offer a robust and effective attachment of the back gasket to the heat transfer plate. The connection member of the first gasket attachment means may be arranged to be received in an attachment groove of the heat transfer plate.

The back gasket may further comprise a second gasket attachment means comprising a connection member. The connection member may engage with, and project from, an outside of one of the third, fifth, fourth and sixth ring portions. The second gasket attachment means may be arranged to be fastened to a heat transfer plate to attach the back gasket to the same. To this end, as a first example, the second gasket attachment means may be arranged to engage with, for example "pinch", a heat transfer plate edge. As another example, the second gasket attachment means may be arranged to be glued or taped to the heat transfer plate. As yet another example, the second gasket attachment means may be arranged to engage with a hole or a recess in the heat transfer plate. A second gasket attachment means engaging with one of the third, fifth, fourth and sixth ring portions may offer a robust and effective attachment of the back gasket to the heat transfer plate. The connection member of the second gasket attachment means may be arranged to be received in an attachment groove of the heat transfer plate.

The connection member of the second gasket attachment means may further engage with, and project from an outside of, the ring portion which is integrally formed with the one of the third, fifth, fourth and sixth ring portions with which the connection member engages. Thus, the connection member of the second gasket attachment means may engage with the third and fifth ring portions or the fourth and sixth ring portions. For example, the connection member of the second gasket attachment means may form a loop arranged to engage with, for example by being glued or taped to, a heat transfer plate so as to attach the back gasket to the same. A second gasket attachment means engaging with both the third and the fifth ring portion, or both the fourth and the sixth ring portion, may offer an even more robust and effective attachment of the back gasket to the heat transfer plate.

The back gasket may be so deigned that the field gasket area enclosed by the annular field portion of the back gasket has one symmetry axis only. Thereby, the back gasket may fit a heat transfer plate of an assembly having differently configured first and second end portions.

The back gasket may further comprise a support projection projecting from an inside of one of one of the third, fourth, fifth and sixth ring portions and into the ring gasket area enclosed by this one of one of the third, fourth, fifth and sixth ring portions. The support projection may be arranged to be received in a support groove of a heat transfer plate. The support projection may provide increased support to the back gasket when this is arranged on a heat transfer plate. The support projection, which has a free end, may project, possibly perpendicularly, from a part of the ring portion along which the ring portion is integrally formed with the other one of the ring portions. This part of the ring portion may extend along a center axis of the field gasket area enclosed by the annular field portion of the back gasket. There may be one or more support projections for one or more of the third, fourth, fifth and sixth ring portions.

An arrangement according to the invention comprises an appliance as described above, and a back gasket as described above. The back gasket is arranged in the HT back gasket groove of the heat transfer plate of the appliance.

Still other objectives, features, aspects and advantages of the invention will appear from the following detailed description as well as from the drawings.

### Brief Description of the Drawings

The invention will now be described in more detail with reference to the appended schematic drawings, in which
Figs. 1a and 1b are essentially similar perspective views schematically illustrating a part of an apparatus, which comprises plate assemblies according to the invention, in a disassembled state, and different fluid paths through the apparatus,
Fig. 2 is a schematic plan view of a front side of a plate assembly of the apparatus in Fig. 1a,
Fig. 3 is a schematic plan view of a front side of a heat transfer plate of the plate assembly in Fig. 2,
Fig. 4 is a schematic partial side view of the heat transfer plate in Fig. 3,
Fig. 5 is a schematic plan view of a part of the heat transfer plate in Fig. 3,
Fig. 6 is an enlargement of a portion of the heat transfer plate in Fig. 3,
Fig. 7a is a cross section, along a line A-A illustrated in Fig. 6, of a portion of the plate assembly in Fig. 2, Fig. 7a consisting of two sub figures of which the lower one is an enlargement of part of the upper one,
Fig. 7b is another cross section, along a line B-B illustrated in Fig. 6, of the portion in Fig. 7a,
Fig. 8 is a schematic plan view of a part of the plate assembly in Fig. 2,
Fig. 9 is a schematic plan view of a back gasket of the apparatus in Fig. 1a,
Fig. 10 is a schematic back plan view of an arrangement according to the invention, and
Fig. 11 is a schematic front plan view of an arrangement according to the invention.

### Detailed Description

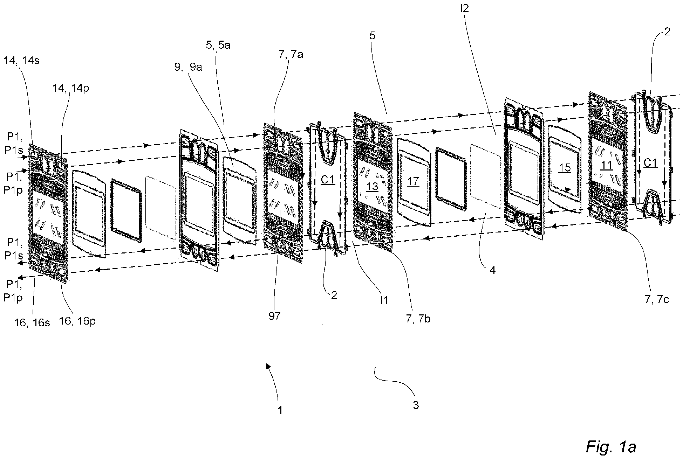

Fig. 1a illustrates a part of an apparatus 1 used for producing hydrogen through electrolysis, here alkaline water electrolysis. The apparatus 1 comprises a stack 3 (only partly illustrated) of essentially similar appliances 5, a plurality of back gaskets 2 and a plurality of front gasket arrangements 4. Each of the appliances 5 comprises a heat transfer plate 7 and an electrode device 9 in the form of a plate. The heat transfer plates 7 each has a front side 11 and an opposing back side 13. The electrode devices 9 each has a front side 15 and a back side 17. In the appliances 5, the front side 11 of the heat transfer plate 7 abuts the back side 17 of the electrode device 9. To enable the electrolysis, a current is applied to the apparatus 1 to turn the appliances into electrodes, more particularly every second one of the appliances 5 into anodes and the rest of the appliances 5 into cathodes.

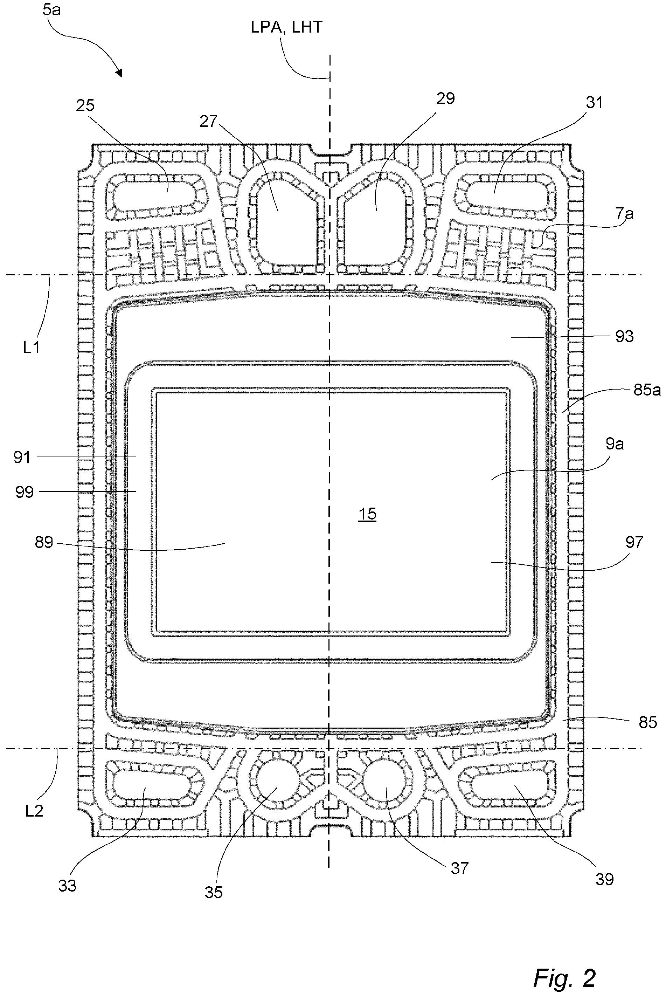

In the stack 3, the appliances 5 are "turned" in relation to each other, i.e. arranged electrode device front side 15 to electrode device front side 15 and heat transfer plate back side 13 to heat transfer plate back side 13. This is achieved by rotating every second one of the appliances 5 180 degrees around a respective appliance longitudinal center axis LPA (Fig. 2) with respect to the rest of the appliances 5.

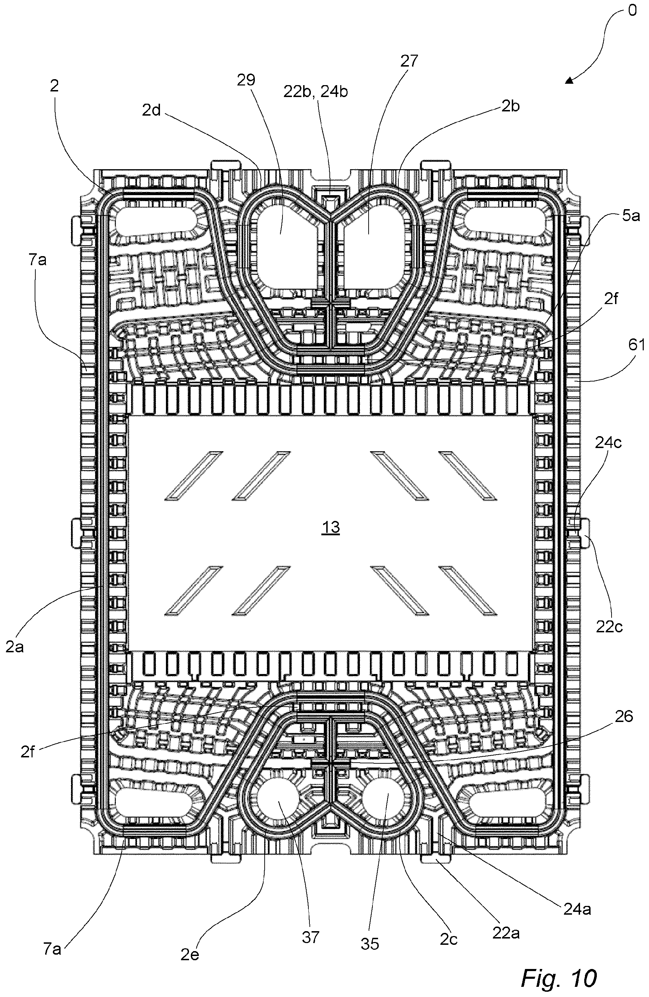

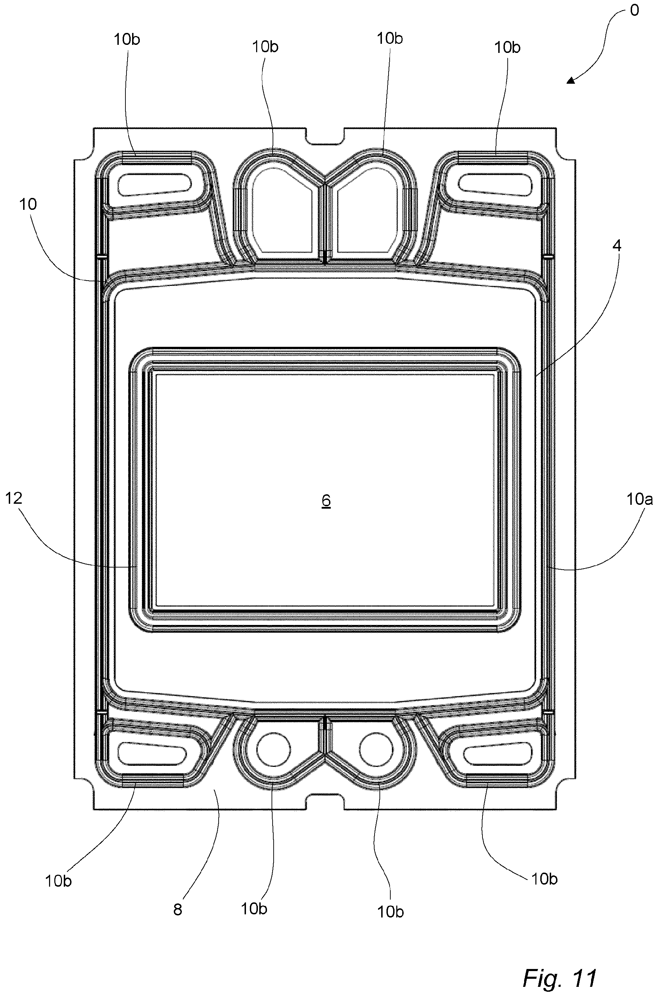

One of the appliances 5, denoted 5a, the heat transfer plate of the appliance 5a, denoted 7a, and the electrode device of the appliance 5a, denoted 9a, are illustrated in further detail in Figs. 2 to 8 and 10 to 11. In the apparatus 1, the appliance 5a is arranged to cooperate with one of the back gaskets 2 and one of the front gasket arrangements 4, as will be further described below. The appliance 5a, the respective back gasket 2 and the respective front gasket arrangement 4 forms an arrangement 0 which is illustrated in Figs. 10 and 11.

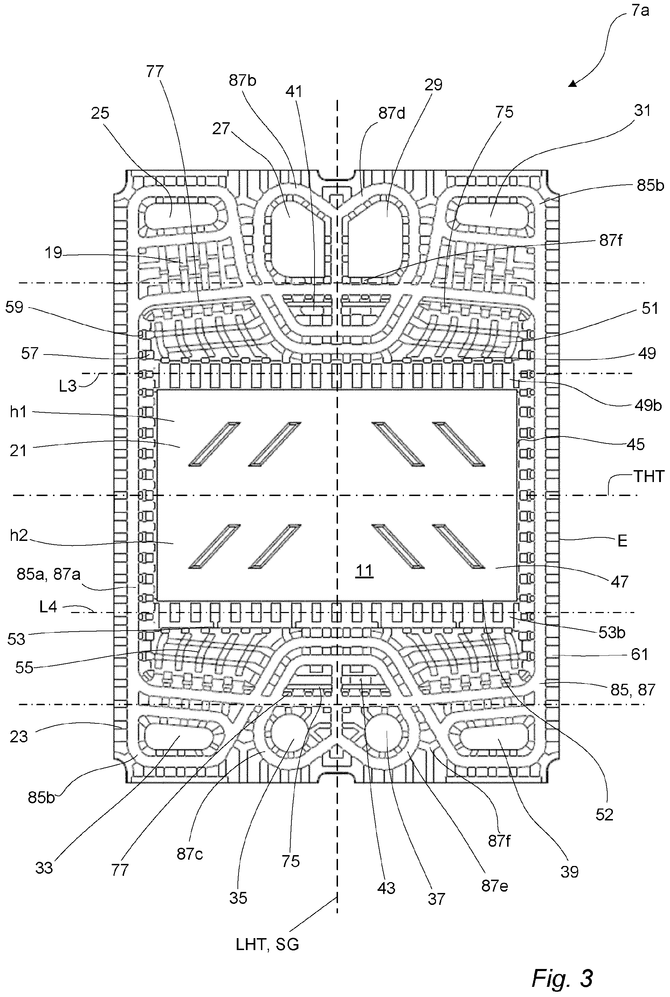

With reference to Fig. 3, the heat transfer plate 7a is formed of a sheet of stainless steel (could be other materials in other embodiments) of thickness t1 and has a first end portion 19, an intermediate portion 21 and a second end portion 23 arranged in succession along a longitudinal center axis LHT of the heat transfer plate 7a. In the appliance 5a, the longitudinal center axis LHT of the heat transfer plate 7a is aligned with the longitudinal center axis LPA (Fig. 2) of the appliance 5a. The borders between the first end portion 19, the intermediate portion 21 and the second end portion 23 are illustrated with ghost lines without reference numerals in Fig. 3. The first end portion 19 comprises a first porthole 25, a third porthole 27, a fifth porthole 29 and a seventh porthole 31, while the second end portion 23 comprises a second porthole 33, a fourth porthole 35, a sixth porthole 37 and an eighth porthole 39. The first, second, third and fourth portholes 25, 33, 27 and 35 are mirrorings, across the longitudinal center axis LHT of the heat transfer plate 7a, of the seventh, eighth, fifth and sixth portholes 31, 39, 29 and 37, respectively. Further, a first transfer hole 41 is arranged within a first half h1 of the heat transfer plate 7a, and a second transfer hole 43 is arranged within a second half h2 of the heat transfer plate 7a, which first half h1 and second half h2 are arranged on opposite sides of the transverse center axis THT and comprise the first end portion 19 and the second end portion 23, respectively, of the heat transfer plate 7a. As is clear from Fig. 3, the first and second transfer holes 41 and 43 are arranged within the intermediate portion 21 of the heat transfer plate 7a, on opposite sides of the longitudinal center axis LHT of the heat transfer plate 7a.

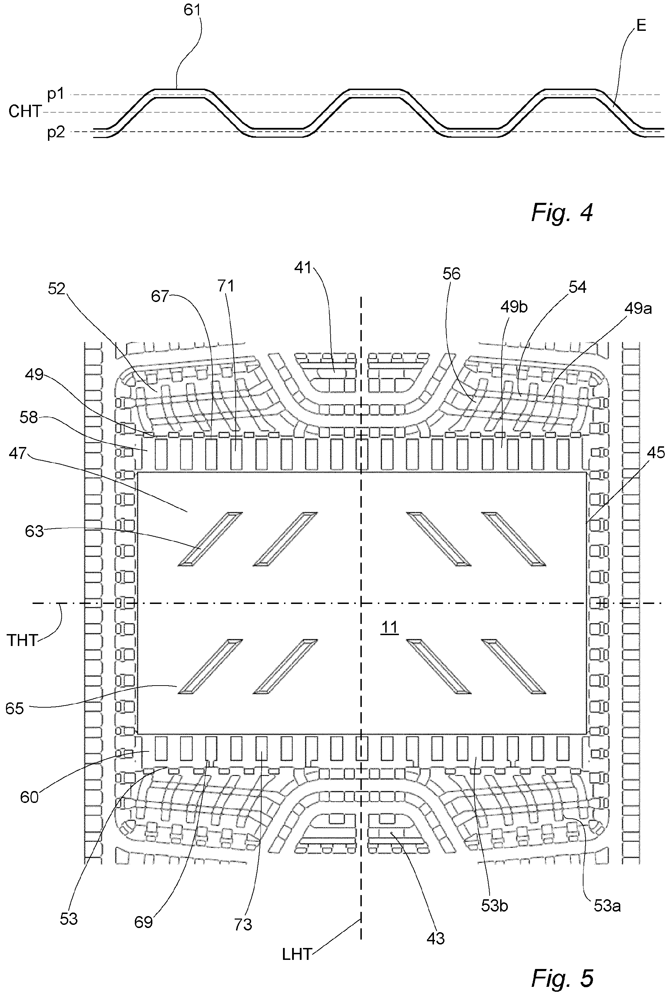

As heat transfer plates normally are, the heat transfer plate 7a is pressed with corrugation patterns of ridges and valleys in relation to a respective central extension plane CHT of the heat transfer plate 7a, which central extension plane is parallel to the figure plane of Fig. 3 and illustrated in Fig. 4. The corrugation patterns within different areas of the heat transfer plate 7a are different. More particularly, the intermediate portion 21 comprises a heat transfer area 45 which is pressed with a heat transfer corrugation pattern 47 (only schematically illustrated in Fig. 3), a first distribution area 49 which is pressed with a first distribution pattern 51 and a second distribution area 53 which is pressed with a second distribution pattern 55. The first distribution area 49 extends between the first end portion 19 and the heat transfer area 45 while the second distribution area 53 extends between the second end portion 23 and the heat transfer area 45. The intermediate portion 21 further comprises an annular first support area 57 and an annular second support area 59. The first support area 57 encircles the heat transfer area 45, the first distribution area 49 and the second distribution area 53. The second support area 59 encircles the first support area 57. The heat transfer area 45, the first distribution area 49, the second distribution area 53 and the first support area 57 (but not the second support area 59) are comprised in a central part 52 of the heat transfer plate 7. An outer edge portion 61 of the heat transfer plate 7a is pressed with alternately arranged ridges and valleys extending from an outer edge E of the heat transfer plate 7a. As is illustrated in Fig. 4, the ridges and valleys of the outer edge portion 61 extends in and between parallel first and second extreme planes p1 and p2 extending parallel to the central extension plane CHT. Corrugations are also provided around the first and second transfer holes 41 and 43, as is illustrated for example in Fig. 3.

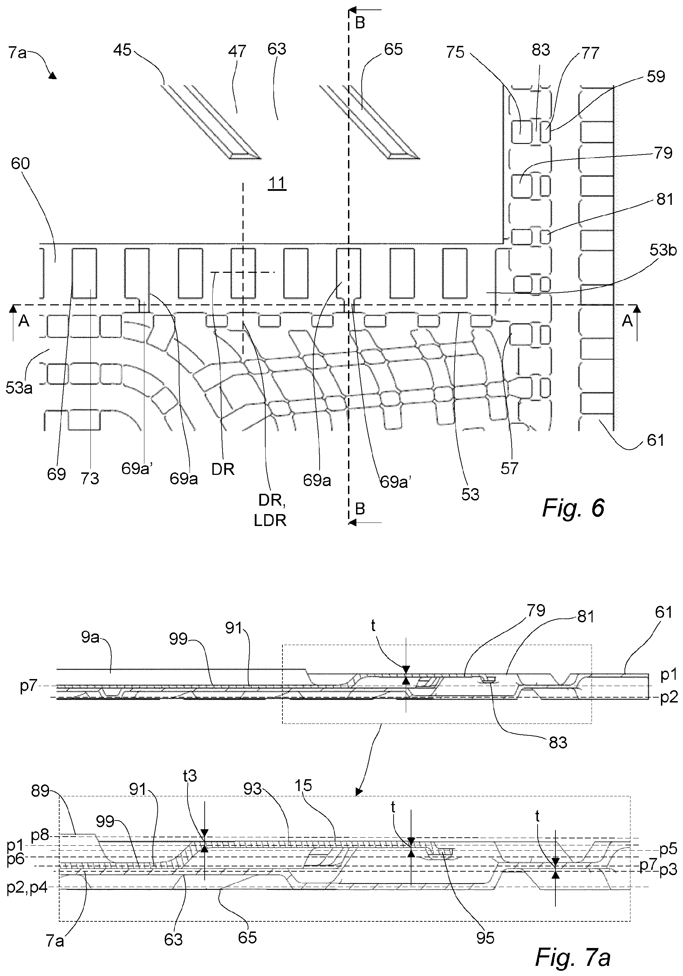

With reference to Figs. 5, 6, 7a and 7b, the heat transfer corrugation pattern 47 is of so-called herringbone type. As seen from the front side 11 of the heat transfer plate 7a, the heat transfer corrugation pattern 47 comprises alternately arranged elongate ridges 63 and valleys 65 which are inclined in relation to the longitudinal center axis LHT of the heat transfer plate 7a. The ridges 63 and the valleys 65 extend in and between parallel third and fourth extreme planes p3 and p4 (Fig. 7a). The fourth extreme plane p4 coincides with the second extreme plane p2 and the third extreme plane p3 extends between the first and fourth extreme planes p1, p4. Thus, since the third extreme plane p3 is arranged below the first extreme plane p1, the heat transfer area 45 is, at the front side 11 of the heat transfer plate 7a, "recessed" in relation to the ridges of the outer edge portion 61 of the heat transfer plate 7a.

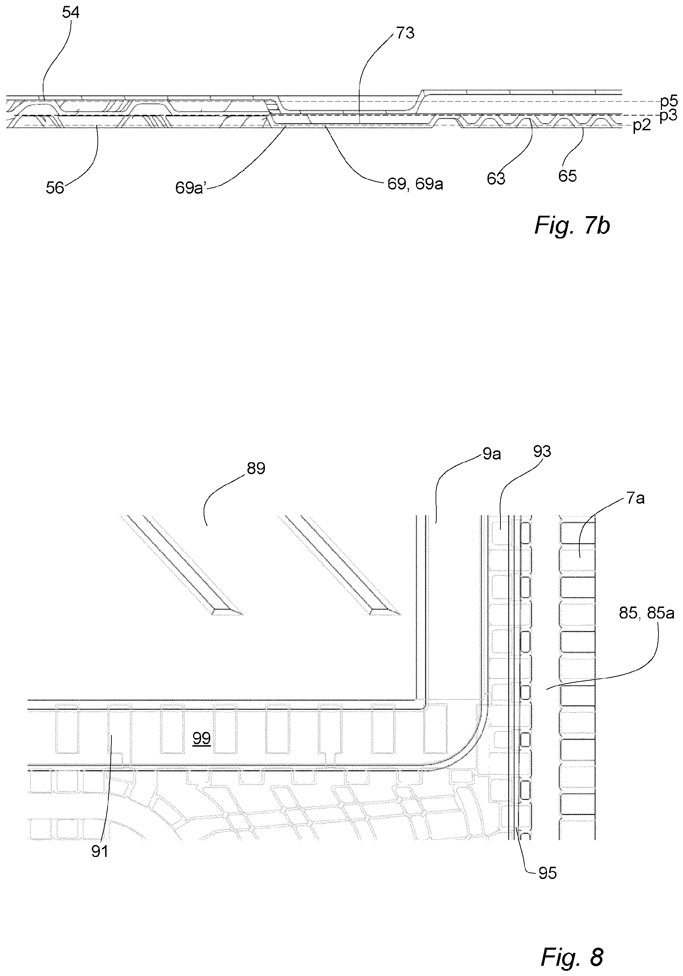

With special reference to Fig. 5 and 7b, the first distribution area 49 comprises a first primary distribution sub area 49a and a first secondary distribution sub area 49b, which first secondary distribution sub area 49b extends between, and borders on, the first primary distribution sub area 49a and the heat transfer area 45. Similarly, the second distribution area 53 comprises a second primary distribution sub area 53a and a second secondary distribution sub area 53b, which second secondary distribution sub area 53b extends between, and borders on, the second primary distribution sub area 53a and the heat transfer area 45. The first and second primary distribution sub areas 49a and 53a are each provided with a pattern of so-called chocolate type which comprises ridges 54 and valleys 56 forming a grid pattern and extending in and between the second extreme plane p2 and a fifth extreme plane p5 which is parallel thereto. The fifth extreme plane p5 extends between the first and third extreme planes p1 and p3 (Fig. 7a). With reference to Figs. 5, 6, 7a and 7b, which illustrate (part of) the second distribution area 53, the first and second secondary distribution sub areas 49b and 53b comprise a respective rectangular plane surface 58 and 60 which extend parallel to the transverse center axis THE of the heat transfer plate 7a. Here, the plane surfaces 58 and 60 extend in the third extreme plane p3 but in alternative embodiments, they may extend in other planes, for example closer to the second extreme plane p2. As seen from the front side 11 of the heat transfer plate 7a, the plane surfaces 58 and 60 are provided with a plurality of distribution recesses 67 (Fig. 5) and 69 (Fig. 6) which are equidistantly distributed in a row extending parallel to the transverse center axis THT (Fig. 3) of the heat transfer plate 7a. A respective bottom 71 (Fig. 5) and 73 (Fig. 6) of these distribution recesses 67 and 69 extend in the second extreme plane p2 (Fig. 7b). Thus, since the fifth extreme plane p5, just like the third extreme plane p3 as said above, is arranged below the first extreme plane p1, the first and second distribution areas 49 and 53 are, at the front side 11 of the heat transfer plate 7a, "recessed" in relation to the ridges of the outer edge portion 61 of the heat transfer plate 7a.

The distribution recesses 67 and 69 are essentially rectangular and orientated such that a respective center axis DR of them, more particularly a respective longitudinal center axis LDR of them (illustrated for one of the distribution recesses 69 in Fig. 6), extends essentially parallel to the longitudinal center axis LHT (Fig. 2) of the heat transfer plate 7a. Thus, the distribution recesses 67 and 69 are elongate in a direction parallel to the longitudinal center axis LHT of the heat transfer plate 7a.

As seen from the front side 11 of the heat transfer plate 7a, the plane surface 60 of the second secondary distribution sub area 53b is further provided with a number of channels 69a' (Fig. 6). Each of the channels 69a' is fluidly connected to a respective one of the distribution recesses denoted 69a so as to form an extension of the same. Here, there are four channels 69a and a total of seventeen distribution recesses 69. However, in alternative embodiments, there may be more or less channels 69a' and/or more or less distribution recesses 69, but typically less channels 69a' than distribution recesses 69. The channels 69a' longitudinally extend essentially parallel to the longitudinal center axis LHT of the heat transfer plate 7 and from the respective one of the distribution recesses 69a towards the second primary distribution sub area 53a. A respective bottom of the channels 69a' extend in the second extreme plane p2 (Fig. 7b). The distribution recesses 67 in the first secondary distribution sub area 49b all lack corresponding channels. The function of the distribution recesses 67 and 69 and the channels 69a' fluidly connected to the distribution recesses 69a will be discussed below.

With reference again to Figs. 3, 6 and 7a, the first support area 57 comprises separately arranged first support ridges 75 while the second support area 59 comprises separately arranged second support ridges 77. Most of the first support ridges 75 is aligned with a respective one of the second support ridges 77. However, as can be seen in Fig. 3, at outer transverse sides of the first and second distribution areas 49, 53 (sides extending along the transverse center axis THT and closest to the portholes), some of the first support ridges 75 are elongated and extend along more than one of the second support ridges 77, and some of the second support ridges 77 are elongated and extend along more than one of the first support ridges 75. Each of the first support ridges 75 comprises a top 79 (Fig. 6) which extends in the fifth extreme plane p5 (Fig. 7a) which is arranged slightly below, on a distance t, from the first extreme plane p1, i.e. between the first and third extreme planes p1 and p3, as said above. Thus, also the first support area 57 is, at the front side 11 of the heat transfer plate 7a, "recessed" in relation to the ridges of the outer edge portion 61 of the heat transfer plate 7a. Each of the second support ridges 77 comprises a top 81 (Fig. 6) which extends in the first extreme plane p1. Between the tops 79 and 81 of the first and second support ridges 75 and 77, the heat transfer plate 7a comprises a recess 83 (Fig. 6) which is discontinuous, annular and extends between the first and second support areas 57 and 59. As is clear from Fig. 7a, a bottom of the recess 83 extends in a sixth extreme plane p6 which is arranged slightly below the fifth extreme plane p5, i.e. between the fifth and third extreme planes p5 and p3. Also the recess 83 is comprised in the central part 82 of the heat transfer plate 7a.

Thus, within the central part 52 of the heat transfer plate 7a, which central part 52 comprises the heat transfer area 45, the first and second distribution areas 49 and 53, the first support area 57 and the recess 83, the heat transfer plate 7a extends in and between the second and fifth extreme planes p2 and p5. Since the fifth extreme plane p5 is arranged closer to second extreme plane p2 than the first extreme plane p1, which together with the second extreme plane p2 define an extension of the complete heat transfer plate 7, the central part 52 of the heat transfer plate 7a forms a recess for accommodating the electrode device 9, as will be further discussed below.

With reference again to Fig. 3, the heat transfer plate 7a further comprises, on its front side 11, a HT front gasket groove 85. The HT front gasket groove 85 includes an annular field portion 85a enclosing the heat transfer area 45, the first and second distribution areas 49 and 53, the first and second support areas 57 and 59 and the first and second transfer holes 41 and 43. The HT front gasket groove 85 further includes ring portions 85b which are arranged outside the field portion 85a and each encloses a respective one of the first to eighth portholes 25, 33, 27, 35, 29, 37, 31 and 39.

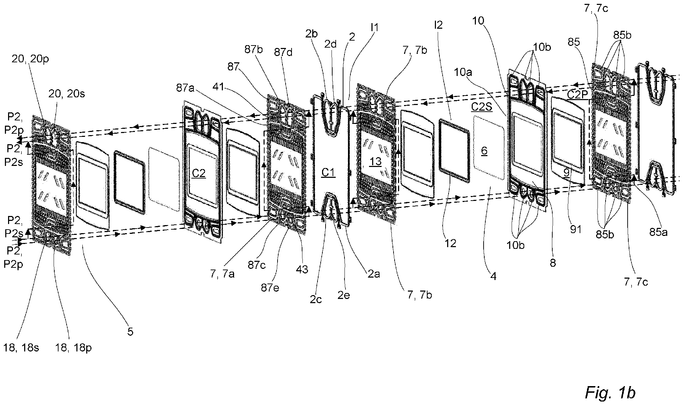

With reference to Fig. 1b, the heat transfer plate 7a further comprises, on its back side 13, a HT back gasket groove 87, which partly is aligned with the HT front gasket groove 85. In Fig. 3, a back of the HT back gasket groove 87 is visible. The HT back gasket groove 87 includes an annular field portion 87a enclosing (Fig. 3) the heat transfer area 45, part of the first and second distribution areas 49 and 53, the first and second support areas 57 and 59 and the first, second, seventh and eights port holes 25, 33, 31 and 39. The HT back gasket groove 87 further includes annular third, fourth, fifth and sixth ring portions 87b, 87c, 87d and 87e (Fig. 3) which are arranged outside the field portion 87a and each encloses a respective one of the third, fourth, fifth and sixth portholes 27, 35, 29 and 37. Further, the third ring portion 87b of the HT back gasket groove 87 also encloses the first transfer hole 41 while the sixth ring portions 87e of the HT back gasket groove 87 also encloses the second transfer hole 43. The third, fourth, fifth and sixth ring portions 87b, 87c, 87d and 87e are arranged on a distance > 0 from the field portion 87a. The HT back gasket groove 87 further includes a plurality of bridge grooves 87f (only a few of which are indicated with reference numeral in Fig. 3). Each of the bridge grooves 87f extends between, and connects, the field portion 87a of the HT back gasket groove 87 and one of the third, fourth, fifth and sixth ring portions 87b, 87c, 87d and 87e of the HT back gasket groove 87.

As is clear from Fig. 3, the third and fifth ring portions 87b and 87d of the HT back gasket groove 87 extend on an outside only of the first secondary distribution sub area 49b, while the fourth and sixth ring portions 87c and 87e of the HT back gasket groove 87 extends on an outside only of the second secondary distribution sub area 53b. The heat transfer area 45 extends between the first and second secondary distribution sub areas 49b and 53b. Thus, the third and fifth ring portions 87b and 87d extend on one side only, while the heat transfer area 45 extends on another opposite side only, of an imaginary third straight line L3 extending perpendicular to the longitudinal center axis LHT of the heat transfer plate 7a. Similarly, the fourth and sixth ring portions 87c, 87e extend on one side only, while the heat transfer area 45 extends on another opposite side only, of an imaginary fourth straight line L4 extending perpendicular to the longitudinal center axis LHT of the heat transfer plate 7a. The HT back gasket groove 87 has one symmetry axis SG only which coincides with the longitudinal center axis LHT of the heat transfer plate 7a. Here (but not necessarily in alternative embodiments of the invention), a bottom of the HT front gasket groove 85, just like a bottom of the HT back gasket groove 87, extend halfway between the first and second extreme planes p1 and p2, i.e. in the central extension plane CHT (Fig. 4).

With reference to Figs. 2 and 7a, the electrode device 9a is formed of a sheet of stainless steel (could be other materials in other embodiments) of thickness t2 which here equals t1, i.e. t1=t2=t, and comprises a center portion 89, an electrode device gasket groove 91 on its front side 15 and an outer portion 93. The center portion 89, the electrode device gasket groove 91 and the outer portion 93 are integrally formed. The electrode device gasket groove 91 is annular and encloses the center portion 89. The outer portion 93 is annular and encloses the electrode device gasket groove 91. The center portion 89 is non-solid, here perforated (perforation not illustrated in the figures), while the complete electrode device gasket groove 91 and the complete outer portion 93 are solid. As seen in Fig. 7a, a peripheral annular outer edge 95 of the outer portion 93 of the electrode device 9a is bent towards the heat transfer plate 7a so as to form a "rim" with a "brim" extending all the way around the electrode device 9a.

With reference to Fig. 1a and 2, as expressed above, in the appliance 5a, the front side 11 of the heat transfer plate 7a abuts the back side 17 of the electrode device 9a. Arranged like this, the electrode device 9a covers an engagement portion 97 of the heat transfer plate 7a, which engagement portion 97 is comprised in the central part 82 of the heat transfer plate 7a. The shape and size of the engagement portion 97 of the heat transfer plate 7a is defined by a periphery of the "brim" of the electrode device 9a. The engagement portion 97 is arranged between imaginary first and second straight lines L1 and L2 (Fig. 2) which extend perpendicular to the longitudinal center axis LHT of the heat transfer plate 7a. The first, third, fifth and seventh portholes 25, 27, 29 and 31 are arranged on one side, while the engagement portion 97 is arranged on the other side, of the imaginary first straight line L1. Similarly, the second, fourth, sixth and eighth portholes 33, 35, 37 and 39 are arranged on one side, while the engagement portion 97 is arranged on the other side, of the imaginary second straight line L2.

With reference to Figs. 2, 4, 6, 7a, 7b and 8 (which illustrates the electrode device 9a as see-through), when the electrode device 9a engages properly with the heat transfer plate 7a, the recess 83 of the heat transfer plate 7a receives the outer edge 95 of the electrode device 9a (Fig. 7a), and the field portion 85a of the HT front gasket groove 85 of the heat transfer plate 7a encircles the electrode device 9a (Fig. 2). Further, the tops 79 of the first support ridges 75 of the first support area 57 of the heat transfer plate 7a (Fig. 6) contact the outer portion 93 of the electrode device 9a on an inside of the outer edge 95 thereof (Fig. 7a). As illustrated in Fig. 2 in combination with Fig. 3 and Fig. 8, the solid outer portion 93 of the electrode device 9a covers the first and second primary distribution sub areas 49a and 53a and the first and second transfer holes 41 and 43 of the heat transfer plate 7a. The electrode device gasket groove 91 covers most of the first and second secondary distribution sub areas 49b and 53b and part of the heat transfer area 45, while the perforated center portion 89 covers the rest of the heat transfer area 45. As is clear from Fig. 7a, the outer portion 93 of the electrode device 9a has a thickness t on the inside of the outer edge 95. Since the tops 79 of the heat transfer plate 7a supporting the outer portion 93 of the electrode device 9a extend a distance t below tops of the ridges of the outer edge portion 61 of the heat transfer plate 7a, the front side 15 of the electrode device 9a will, within the outer portion 93 on the inside of the outer edge 95, extend flush with the tops of the ridges of the outer edge portion 61 of the heat transfer plate 7a, i.e. extend in the first extreme plane p1. Further, a bottom 99 of the electrode device gasket groove 91 extends in a seventh extreme plane p7 extending a distance t above the third extreme plane p3 (Fig. 7a). The electrode device 9a has a thickness t within the bottom 99 of the electrode device gasket groove 91. Therefore, the bottom 99 of the electrode device gasket groove 91 will abut the heat transfer plate 7a within the first and second secondary distribution sub areas 49b and 53b, outside the distribution recesses 67 and 69 (Figs. 4 and 8). Within the center portion 89, the electrode device 9a extends in an eighth extreme plane p8 which extends a distance t3 above the first extreme plane p1 (Fig. 7a). Thus, the fifth and eighth extreme planes p5 and p8 extend on opposite sides of the first extreme plane p1. In that the center portion 89 of the electrode device 9a projects beyond the first extreme plane p1, it may compensate for a space occupied by a rubber sheet 8 of a front gasket arrangement 4 (Figs. 1b and 11) to be described below, which rubber sheet extends outside the center portion 89 in the apparatus 1 comprising the electrode device 9a and the front gasket arrangement.

As is clear from the figures, the heat transfer plate 7a and the electrode device 9a are designed to match each other. As illustrated in Fig. 3, the field portion 85a of the HT front gasket groove 85 of the heat transfer plate 7a has straight longitudinal sides extending parallel to the longitudinal center axis LHT of the heat transfer plate, and, as seen from a center of the heat transfer plate 7a, outwards bulging transverse sides connecting the longitudinal sides. Thus, also the first and second support areas 57, 59 of the heat transfer plate 7a have opposing straight longitudinal portions and opposing curved transverse portions. Further, as illustrated in Fig. 2, the electrode device 9a has opposing straight longitudinal outer edge portions and opposing curved transverse outer edge portions.

The above description of the appliance 5a, the heat transfer plate 7a and the electrode device 9a is applicable also to the other appliances 5, heat transfer plates 7 and electrode devices 9 of the apparatus 1.

With reference again to Fig. 1a, in the apparatus 1, the stack 3 of appliances 5 is arranged between two frame plates (not illustrated). Of course, the apparatus 1 may comprise one or more additional heat transfer plates which are not part of an appliance, for example adjacent the frame plates. The heat transfer plates 7 of the appliances 5 can be seen as arranged in pairs, wherein heat transfer plates 7a and 7b form one of these pairs, while heat transfer plate 7c forms one of the heat transfer plates of another adjacent one of these pairs. The heat transfer plates of each pair form between them a first interspace I1. Further, a second interspace I2 is formed between each two adjacent pairs of heat transfer plates 7.

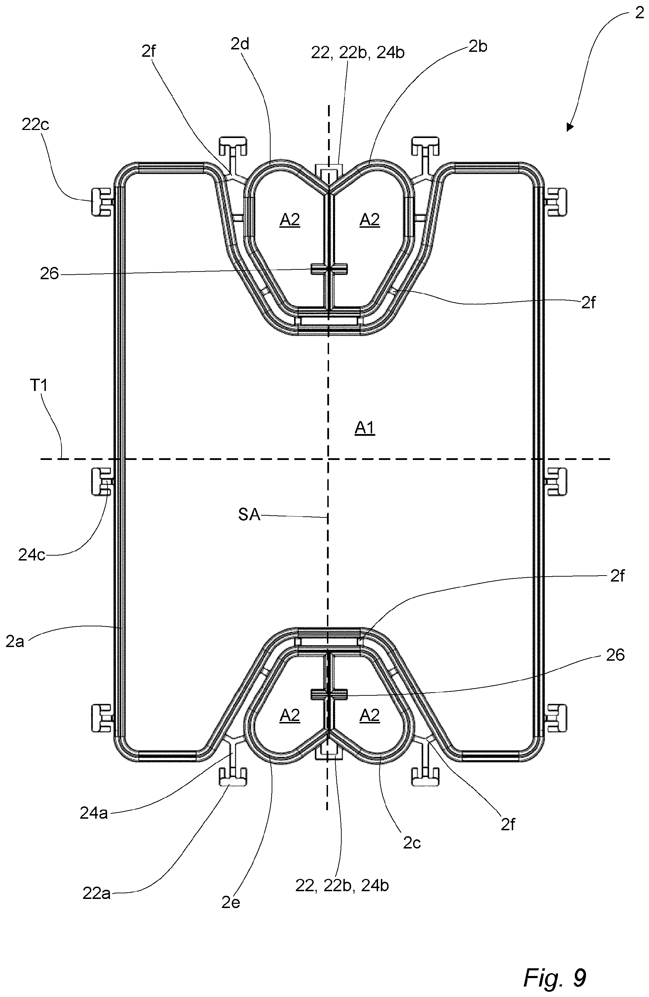

With reference also to Fig. 1b, a rubber back gasket 2 is arranged within each of the first interspaces I1 to define a first flow channel C1 therein. The back gasket 2, which is illustrated in more detail in Fig. 9, comprises an annular field portion 2a, which encloses a field gasket area A1, and annular third, fourth, fifth and sixth ring portions 2b, 2c, 2d and 2e, which are arranged outside the field gasket area A1. The field gasket area A1 has one symmetry axis SA only. Each of the third, fourth, fifth and sixth ring portions 2b, 2c, 2d and 2e encloses a ring gasket area A2 which is smaller than the field gasket area A1 (not all ring gasket areas A2 having the same size and shape). The third and fifth ring portions 2b and 2d are integrally formed and arranged on one side of a transverse center axis T1 of the field gasket area A1, which transverse center axis T1 is perpendicular to the symmetry axis SA. Similarly, the fourth and sixth ring portions 2c and 2e are integrally formed and arranged on another opposite side of the transverse center axis T1. As is clear from Fig. 9, the field portion 2a of the back gasket 2 is separate, and arranged on a distance from, from the third, fourth, fifth and sixth ring portions 2b, 2c, 2d and 2e.

The back gasket 2 further comprises a plurality of, here fourteen, gasket bridges 2f which each extends between the field portion 2a and one of the third, fourth, fifth and sixth ring portions 2b, 2c, 2d and 2e to connect these. Moreover, the back gasket 2 comprises a plurality of gasket attachment means 22 of different types. Here there are four first gasket attachment means 22a, which each comprise a connection member 24a engaging with, and projecting from, a respective one of the outermost gasket bridges 2f. Further, there are two second gasket attachment means 22b. One of the second gasket attachment means 22b comprises a connection member 24b engaging with, and projecting from, a respective outside of the third and fifth ring portions 2b and 2d so as to form a loop therewith. The other one of the second gasket attachment means 22b comprises a connection member 24b engaging with, and projecting from, a respective outside of the fourth and sixth ring portions 2c and 2e so as to form a loop therewith. Further, there are six third gasket attachment means 22c, which each comprise a connection member 24c engaging with, and projecting from, an outside of the field portion 2a. Naturally, the number of first, second and/or third gasket attachment means may be different in other embodiments of the invention.

The back gasket 2 further comprises a plurality of support projections 26, here four, each of which projects from an inside of a respective one of the third, fourth, fifth and sixth ring portions 2b, 2c, 2d and 2e. The support projection 26 of the third ring portion 2b projects from a part of the third ring portion 2b along which part the third ring portion 2b is integrally formed with the fifth ring portion 2d. Similarly, the support projection 26 of the fifth ring portion 2d projects from a part of the fifth ring portion 2d along which part the fifth ring portion 2d is integrally formed with the third ring portion 2b. These integrally formed parts of the third and fifth ring portions 2b and 2d extend along a center axis, which coincides with the symmetry axis SA, of the field gasket area A1. The support projections 26 of the third and fifth ring portions 2b and 2d are aligned with each other and project in opposite directions essentially parallel to the transverse center axis T1 of the field gasket area A1. In a corresponding way, the support projection 26 of the fourth ring portion 2c projects from a part of the fourth ring portion 2c along which part the fourth ring portion 2c is integrally formed with the sixth ring portion 2e. Similarly, the support projection 26 of the sixth ring portion 2e projects from a part of the sixth ring portion 2e along which part the sixth ring portion 2e is integrally formed with the fourth ring portion 2c. These integrally formed parts of the fourth and sixth ring portions 2c and 2e extend along the symmetry axis SA, of the field gasket area A1. The support projections 26 of the fourth and sixth ring portions 2c and 2e are aligned with each other and project in opposite directions essentially parallel to the transverse center axis T1 of the field gasket area A1.

With reference to Figs. 1b, 3 and 10, when the back gasket 2 is properly arranged on the heat transfer plate 7a, the field portion 2a of it is received in the field portion 87a of the HT back gasket groove 87 while the third, fourth, fifth and sixth ring portions 2b, 2c, 2d and 2e of it are received in the third, fourth, fifth and sixth ring portions 87b, 87c, 87d and 87e, respectively, of the HT back gasket groove 87. Further, the gasket bridges 2f of the back gasket 2 are received in a respective one of the bridge grooves 87f of the HT back gasket groove 87. Furthermore, the first and third gasket attachment means 22a and 22c of the back gasket 2 are arranged around the outer edge portion 61 of the heat transfer plate 7a with the connection members 24a and 24c thereof received in a respective dedicated groove of the heat transfer plate 7a. In a similar way, the connection members 24b of the second gasket attachment means 22b of the back gasket 2 are received in a respective dedicated groove of the heat transfer plate 7a. Finally, also the support projections 26 of the back gasket 2 are received in a respective dedicated groove of the heat transfer plate 7a.

As is illustrated in Fig. 1b, a front gasket arrangement 4 is arranged within each of the second interspaces I2 to define a second flow channel C2 therein. The front gasket arrangement 4, which is illustrated in more detail in Fig. 11, comprises a hydroxide ion permeable membrane 6, a rubber sheet 8 of thickness t3 with openings for passage of fluids and for exposure of the membrane 6, and rubber gaskets 10 and 12. The gasket 10 comprises an annular field portion 10a and ring portions 10b arranged to be received in the annular field portion 85a and the ring portions 85b, respectively, of the HT front gasket groove 85 of the heat transfer plates 7. The gasket 12 is annular, arranged in the electrode device gasket groove 91 of the electrode devices 9 and configured to fix the membrane 6 to the rubber sheet 8. The front gasket arrangement 4 splits the corresponding second flow channel C2 in a second primary sub channel C2P and a second secondary sub channel C2S, which sub channels are parallel and extend on opposite sides of the front gasket arrangement 4.

When the apparatus 1 is ready for use, the appliances 5 and the interposed back gaskets 2 and front gasket arrangements 4 are compressed, by some kind of tightening means, between the frame plates so as to tightly form the first and second flow channels C1 and C2 and also ports for conveying first and second fluids through the apparatus 1. Compressed like that, the heat transfer plates 7 of each of the pairs, such as the heat transfer plates 7a and 7b, abut each other in contact areas, while contact between adjacent pairs of heat transfer plates 7, such as the heat transfer plates 7b and 7c, is prevented by the presence of the front gasket arrangements 4 between the plate pairs. This separation or insulation between the plate pairs is necessary for the apparatus 1 to work properly for electrolysis. Typically, the front gasket arrangements 4 is fragile. In that the outer edge 95 (Fig. 7a) of the electrode devices 9, which outer edge 95 may be sharp, is bent away from the respective adjacent front gasket arrangement 4, the rubber sheet 8 thereof is less likely to be damaged by the electrode device 9.

With continued reference to Figs. 1a and 1b, the ports comprise first inlet port means 14 and first outlet port means 16 for the first fluid and second inlet port means 18 and second outlet port means 20 for the second fluid. In turn, the first inlet port means 14 comprises a first primary inlet port 14p and a first secondary inlet port 14s, the first outlet port means 16 comprises a first primary outlet port 16p and a first secondary outlet port 16s, the second inlet port means 18 comprises the second primary inlet port 18p and the second secondary inlet port 18s, and the second outlet port means 20 comprises the second primary outlet port 20p and the second secondary outlet port 20s. Here, the first fluid is a cooling fluid, for example deionized water, and the second fluid is an electrolyte, for example a mixture of water and an alkaline agent, such as potassium hydroxide.

With reference to Fig. 1a and the dashed lines, a first fluid path P1 for conveying the first fluid through the apparatus 1 comprises a first primary fluid path P1p and a first secondary fluid path P1s. The first primary fluid path P1p extends through the first primary inlet port 14p, through the first flow channels C1 and into the first primary outlet port 16p. The first secondary fluid path P1s extends through the first secondary inlet port 14s, through the first flow channels C1 and into the first secondary outlet port 16s.

With reference to Fig. 1b and the dashed lines, a second fluid path P2 for conveying the second fluid through the apparatus 1 comprises a second primary fluid path P2p and a second secondary fluid path P2s. The second primary fluid path P2p extends through the second primary inlet port 18p, into the first interspaces I1 outside the first flow channels C1, through the respective second transfer hole 43 of every second one of the heat transfer plates, i.e. plates 7a, 7c,..., into the second primary sub channels C2P, through the second primary sub channels C2P, through the respective first transfer hole 41 of every second one of the heat transfer plates, i.e. plates 7a, 7c..., into the first interspaces I1 outside the first flow channels C1, and into the second primary outlet port 20p. The second secondary fluid path P2s extends through the second secondary inlet port 18s, into the first interspaces I1 outside the first flow channels C1, through the respective second transfer hole 43 of every second one of the heat transfer plates, i.e. plates 7b,..., into the second secondary sub channels C2S, through the second secondary sub channels C2S, through the respective first transfer hole 41 of every second one of the heat transfer plates, i.e. plates 7b,..., into the first interspaces I1 outside the first flow channels C1 and into the second secondary outlet port 20s.

With reference also to Figs. 5, 7b and 8, when the second fluid passes the second transfer hole 43 of the heat transfer plates 7, it is fed towards the solid outer portion 93 of the adjacent one of the electrode devices 9. The outer portion 93 and the electrode device gasket groove 91 of the electrode device 9 together with the second distribution area 53 of the heat transfer plate 7 transversally spreads the second fluid to achieve an even second fluid distribution inside the corresponding appliance 5. More particularly, after the second fluid has passed the second transfer hole 43, it is transversally spread by being fed through the second primary distribution sub area 53a. When the second fluid approaches the second secondary distribution sub area 53b, it will be hindered by a restriction formed by a backside of the electrode device gasket groove 91 and a border of the second secondary distribution sub area 53b and, thus, further transversally spread. At the channels 69a' of the distribution recesses 69a, it will be easier for the second flow to enter the second secondary distribution sub area 53b. After the second fluid has entered the second secondary distribution sub area 53b, it is fed there though and further transversally spread. When the second fluid approaches the heat transfer area 45, it will be hindered by a restriction formed by a backside of the electrode device gasket groove 91 and another border of the second secondary distribution sub area 53b and, thus, further transversally spread. At the distribution recesses 69 it will be easier for the second fluid to enter heat transfer area 45.

When the second fluid, i.e. the electrolyte, is fed through the second flow channels C2, i.e. the second primary sub channels C2P and the second secondary sub channels C2S (Fig. 1b), as described above, more particularly across the heat transfer areas 45 of the adjacent heat transfer plates 7, water in the electrolyte is split into hydrogen and oxygen and a primary fraction is formed in the second primary sub channels C2P and a secondary fraction is formed in the second secondary sub channels C2S, one of the fractions containing more oxygen and less hydrogen than the other fraction. The primary fraction, just like the secondary fraction, is transversally collected by the electrode device gasket groove 91 and the solid outer portion 93 of the electrode device 9, together with the first distribution area 49 of the heat transfer plates 7, of the adjacent appliances 5, in a way that is essentially reverse as compared to the above described (slightly different since the distribution recesses 67 of the first secondary distribution sub area 49b lacks channels corresponding to the channels 69a'). Thereafter, the primary and secondary fractions are fed through the first transfer holes 41 of the heat transfer plates 7 to be separately discharged from the apparatus 1 via outlets not illustrated.

When electrolysis is performed in the second flow channels C2, heat is generated. In that the first fluid, i.e. the deionized water, is fed through the first flow channels C1, i.e. on both sides of the electrolysis channels C2, the heat generated through the electrolysis is effectively and uniformly diverted from the apparatus 1.

It should be noted that the second fluid is referred to as second fluid even if its characteristics changes when it is fed through the apparatus, and that both the primary fraction and the secondary fraction of the second fluid are referred to as second fluid even if their separate compositions vary and differ from each other and from the original second fluid.

It should be stressed that all components necessary to make the apparatus work properly, such as power sources, connections, wiring, control units, valves, pumps, gaskets, plates, sensors, pipes, dosing equipment, etc., are not described herein or illustrated in the figures. Further, characteristics of the different components of the apparatus which are not relevant to the present invention are not described or illustrated herein.

The above-described embodiment of the present invention should only be seen as an example. A person skilled in the art realizes that the embodiment discussed can be varied in a number of ways without deviating from the inventive conception.

In the above-described embodiment, the electrode device has the shape of an integrally formed plate with parallel straight longitudinal outer edge portions and outwards bulging transverse outer edge portions, i.e. a plate with a "smooth" contour. In alternative embodiments, the electrode device could be configured differently. For example, it could be formed of separate components arranged to cooperate so as to form the electrode device. As a specific example, the center portion of the electrode device could be separately formed. Further, the outer portion and the gasket groove of the electrode device could be integrally formed in the shape of a "frame" arranged to receive the center portion. Additionally/alternatively, the electrode device could have other shapes and/or contours than described above. For example, instead of having a "smooth" contour, the electrode device could have a contour which, due to manufacturing or functional reasons which will not be discussed here, is locally recessed at one or more places.

In the above-described embodiment, the outer portion of the electrode device is annular so as to completely surround the center portion of the electrode device. In alternative embodiments, the outer portion may be differently designed. As an example, it may be arranged to only partially surround the center portion. As a specific example, it may extend only on two opposite sides, e.g. the transverse sides, of the center portion.

In the above-described embodiment, the electrode device has a smooth, i.e. a non-corrugated surface. In alternative embodiments, the electrode device could instead have an at least partly corrugated surface. As a specific example, the outer portion of the electrode plate could be corrugated at the back side due to manufacturing or functional reasons which will not be discussed here.

In the above-described embodiment, the heat transfer plates are arranged to non-permanently engage with gaskets at the front side as well as the back side for sealing between the heat transfer plates and adjacent heat transfer plates in an apparatus. A heat transfer plate according to the invention could instead be arranged to be attached, with a permanent sealing, at the back side, to an adjacent heat transfer plate. On such a plate, a bottom of a back field gasket groove could extend in the second extreme plane, i.e. in so-called bottom plane.

In the above-described embodiment, contact between adjacent pairs of heat transfer plates is prevented by the presence of the front gasket arrangements between the plate pairs, which front gasket arrangements comprises insulating sheets. In alternative embodiments, the insulating sheets, and possibly also other parts of the front gasket arrangements, could be omitted and the heat transfer plates could instead be suitably locally coated with insulating material to prevent contact between adjacent pairs of heat transfer plates.

The heat transfer plates may be pressed with other corrugation patterns than specified above. As an example, the heat transfer area of the heat transfer plate need not be pressed with a corrugation pattern of so-called herringbone type but could instead be pressed with a corrugation pattern comprising alternately arranged ridges and valleys extending essentially parallel to the longitudinal center axis of the heat transfer plate.

The electrode device may be fastened, possibly permanently, to the heat transfer plate by means of welding or other types of bonding, for example within the outer portion of the electrode device.

In the above-described embodiment, the appliances, and, thus, the heat transfer plates, are "turned" in relation to each other in the apparatus. In other embodiments, and with suitable design amendments to the heat transfer and electrode devices, the heat transfer plates could instead be "rotated" or "flipped" in relation to each other. In a stack with "rotated" heat transfer plates, the heat transfer plates are arranged back side to front side, and every second heat transfer plate is turned upside down in relation to the rest of the heat transfer plates. In a stack with "flipped" heat transfer plates, the heat transfer plates are arranged front side to front side, and every second heat transfer plate is turned upside down in relation to the rest of the heat transfer plates.

In the above-described embodiment, the cooling fluid is fed into the apparatus at the top, and out of the apparatus at the bottom. In an alternative embodiment, the cooling fluid could instead be fed into the apparatus at the bottom, and out of the apparatus at the top.

The heat transfer plate may be comprised in an apparatus used for another type of electrolysis than alkaline water electrolysis, for example chlor-alkali electrolysis. Further, the heat transfer plate may be comprised in an apparatus for other applications than electrolysis, for example an apparatus in the form of a fuel cell.

It should be stressed that the attributes first, second, third, ..., primary, secondary, and a, b, c, ..., etc. are used herein just to distinguish between species and not to express any kind of mutual order between, or attribute any special characteristics to, the species.

It should be stressed that "receiving", "feeding", "communicating" etc., throughout the text, means "receiving directly or indirectly" and "feeding directly or indirectly" and "communicating directly or indirectly", respectively.

Further, it should be stressed that herein, when it is said that, for example, detail A extends "along" detail B, detail A may extend immediately at, or at a distance from, detail B, parallel or not to detail B.

Above, when it is specified that a component, such as a plate portion, extends in a certain way, such as in a certain plane, it is the center, in a thickness direction, of the component that extends in this way.

It should be stressed that a description of details not directly relevant to the present invention has been omitted and that the figures are just schematic and not drawn according to scale. It should also be said that some of the figures have been more simplified than others. Therefore, some components may be illustrated in one figure but left out on another figure.

## Claims

1. An appliance (5) comprising a heat transfer plate (7) which is corrugated, has opposing front and back sides (11, 13) and comprises a first end portion (19), an intermediate portion (21) and a second end portion (23) arranged in succession along a longitudinal center axis (LHT) of the heat transfer plate (7), the heat transfer plate (7) further comprising first, third and fifth portholes (25, 27, 29) arranged within the first end portion (19), second, fourth and sixth portholes (33, 35, 37) arranged within the second end portion (23), and a heat transfer area (45) arranged within the intermediate portion (21), the heat transfer plate (7) further comprising a HT back gasket groove (87) extending on the back side (13) of the heat transfer plate (7), a first transfer hole (41) arranged within a first half (h1) of the heat transfer plate (7) comprising the first end portion (19), and a second transfer hole (43) arranged within a second half (h2) of the heat transfer plate (7) comprising the second end portion (23), wherein an annular field portion (87a) of the HT back gasket groove (87) encloses the heat transfer area (45), wherein the first and second transfer holes (41, 43) are arranged outside the field portion (87a) of the HT back gasket groove (87), wherein the first and second portholes (25, 33) are arranged within the field portion (87a) of the HT back gasket groove (87), and wherein the third, fourth, fifth and sixth portholes (27, 35, 29, 37) are arranged outside the field portion (87a) of the HT back gasket groove (87), wherein the HT back gasket groove (87) further comprises annular third, fourth, fifth and sixth ring portions (87b, 87c, 87d, 87e) enclosing the third, fourth, fifth and sixth portholes (27, 35, 29, 37), respectively, wherein one of the third and the fifth ring portions (87b, 87d) also encloses the first transfer hole (41) and one of the fourth and sixth ring portions (87c, 87e) also encloses the second transfer hole (43), **characterized in that** the field portion (87a) of the HT back gasket groove (87) is arranged on a distance > 0 from the third, fourth, fifth and sixth ring portions (87b, 87c, 87d, 87e) of the HT back gasket groove (87).

2. An appliance (5) according to claim 1, wherein the heat transfer plate (7) further comprises one or more bridge grooves (87f) extending on the back side (11) of the heat transfer plate (7), each one of said bridge grooves (87f) extending between the field portion (87a) of the HT back gasket groove (87) and one of the third, fourth, fifth and sixth ring portions (87b, 87c, 87d, 87e) of the HT back gasket groove (87).

3. An appliance (5) according to any of the preceding claims, wherein the third and fifth ring portions (87b, 87d) of the HT back gasket groove (87) of the heat transfer plate (7) extend on one side only of an imaginary third straight line (L3) extending perpendicular to said longitudinal center axis (LHT) of the heat transfer plate (7), and the heat transfer area (45) extends on another opposite side only of the imaginary third straight line (L3), and wherein the fourth and sixth ring portions (87c, 87e) of the HT back gasket groove (87) of the heat transfer plate (7) extend on one side only of an imaginary fourth straight line (L4) extending perpendicular to said longitudinal center axis (LHT) of the heat transfer plate (7), and the heat transfer area (45) extends on another opposite side only of the imaginary fourth straight line (L4).

4. An appliance (5) according to any of the preceding claims, wherein the heat transfer plate (7) further comprises a second distribution area (53) which is patterned differently than the heat transfer area (45), which second distribution area (53) is arranged between the second, fourth and sixth portholes (33, 35, 37) and the heat transfer area (45), wherein the second distribution area (53) comprises a second primary distribution sub area (53a) and a second secondary distribution sub area (53b), wherein the second primary distribution sub area (53a) is patterned differently than the second secondary distribution sub area (53b), wherein the second secondary distribution sub area (53b) is arranged between, and borders on, the second primary distribution sub area (53a) and the heat transfer area (45).

5. An appliance (5) according to claim 4, wherein the fourth and sixth ring portions (87c, 87e) of the HT back gasket groove (87) of the heat transfer plate (7) extends on one side only of the second secondary distribution sub area (53b), and the heat transfer area (45) extends on another opposite side only of the second secondary distribution sub area (53b).

6. An appliance (5) according to any of the preceding claims, wherein the HT back gasket groove (87) of the heat transfer plate (7) has one symmetry axis (SG) only.

7. An appliance (5) according to any of the preceding claims, further comprising an electrode device (9) having opposing front and back sides (15, 17), wherein the front side (11) of the heat transfer plate (7) abuts the back side (17) of the electrode device (9), the electrode device (9) covering an engagement portion (97) of the heat transfer plate (7), wherein the first, third and fifth portholes (25, 27, 29) are arranged on one side of an imaginary first straight line (L1) extending perpendicular to said longitudinal center axis (LHT) while the electrode device (9) is arranged on another side of said imaginary first straight line (L1), and wherein the second, fourth and sixth portholes (33, 35, 37) are arranged on one side of an imaginary second straight line (L2) extending perpendicular to said longitudinal center axis (LHT) while the electrode device (9) is arranged on another side of said imaginary second straight line (L2).

8. A back gasket (2) for sealing between two corrugated heat transfer plates (7), the back gasket (2) comprising an annular field portion (2a) enclosing a field gasket area (A1), and annular third, fourth, fifth and sixth ring portions (2b, 2c, 2d, 2e) arranged outside said field gasket area (A1), each of the third, fourth, fifth and sixth annular ring portions (2b, 2c, 2d, 2e) enclosing a ring gasket area (A2) which is smaller than the field gasket area (A1), the third and fifth ring portions (2b, 2d) being arranged on one side of a transverse center axis (T1) of said field gasket area (A1), and the fourth and sixth ring portions (2b, 2d) being arranged on another side of said transverse center axis (T1), **characterized in that** the third and fifth ring portions (2b, 2d) are integrally formed, the fourth and sixth ring portions (2c, 2e) are integrally formed, and the field portion (2a) is separate from the third, fifth, fourth and sixth ring portions (2b, 2d, 2c, 2e).

9. A back gasket (2) according to claim 8, further comprising one or more gasket bridges (2f), each one of said gasket bridges (2f) extending between the field portion (2a) of the back gasket (2) and one of the third, fourth, fifth and sixth ring portions (2b, 2c, 2d, 2e) of the back gasket (2).

10. A back gasket (2) according to claim 9, further comprising a first gasket attachment means (22a) comprising a connection member (24a) engaging with, and projecting from, one of the gasket bridges (2f).

11. A back gasket (2) according to any of claims 8-10, further comprising a second gasket attachment means (22b) comprising a connection member (24b) engaging with, and projecting from, an outside of, one of the third, fifth, fourth and sixth ring portions (2b, 2d, 2c, 2e).

12. A back gasket according to claim 11, wherein the connection member (24b) of the second gasket attachment means (22b) further engages with, and projects from an outside of, the ring portion which is integrally formed with said one of the third, fifth, fourth and sixth ring portions (2b, 2d, 2c, 2e) with which the connection member (22b) engages.

13. A back gasket (2) according to any of claims 8-12, wherein the field gasket area (A1) has one symmetry axis (SA) only.

14. A back gasket (2) according to any of claims 8-13, further comprising a support projection (26) projecting from an inside of one of one of the third, fourth, fifth and sixth ring portions (2b, 2c, 2d, 2e) and into the ring gasket area (A2) enclosed by said one of one of the third, fourth, fifth and sixth ring portions (2b, 2c, 2d, 2e).

15. An arrangement (0) comprising an appliance (5) according to any of claims 1-7 and a back gasket (2) according to any of claims 8-14, wherein the back gasket (2) is arranged in the HT back gasket groove (87) of the heat transfer plate (7).
